# EUROPÄISCHE PATENTSCHRIFT

(11) **EP 1 925 478 B1**
(45) Veröffentlichungstag und Bekanntmachung des Hinweises auf die Patenterteilung: **24.11.2010**
(21) Anmeldenummer: 07022836.6
(22) Anmeldetag: 26.11.2007
(51) Int. Cl.: B60H 3/00

(54) **Belüftungssystem, Heizungs- und/oder Klimaanlage**
Ventilation system, heating and/or air conditioning unit
Système d'aération, installation de chauffage et/ou de climatisation

(30) Priorität: 24.11.2006 DE 102006055977
(43) Veröffentlichungstag der Anmeldung: 28.05.2008
(73) Patentinhaber: Behr GmbH & Co. KG, 70469 Stuttgart (DE)
(72) Erfinder: Stiehler, Daniela, 70597 Stuttgart (DE); Burr, Reinhold, 89522 Heidenheim (DE)

(56) Entgegenhaltungen:
- EP-A- 0 816 148
- WO-A-94/17356
- WO-A-2005/037585
- DE-A1- 10 230 440
- DE-A1-102004 023 376
- DE-T2- 60 029 060
- DE-U1- 20 214 699

## Beschreibung

Die Erfindung betrifft ein Belüftungssystem, eine Heizungs- oder Klimaanlage, insbesondere für Kraftfahrzeuge, gemäß dem Oberbegriff des Anspruchs 1 sowie ein Verfahren zur Entkeimung von Bauteilen und/oder Wasser.

Im Betrieb von Klimaanlagen, insbesondere in Kraftfahrzeugen, treten häufig Geruchsbelästigungen auf, die den Komfort, die Kondition und die Konzentrationsfähigkeit von der klimatisierten Luft ausgesetzten Personen beeinträchtigen. Ursache ist meist die Besiedlung feuchter Oberflächen des Verdampfers der Klimaanlage durch Mikroorganismen, begünstigt durch die Anlagerung von Schmutzpartikeln, die den Mikroorganismen als Nährboden dienen. Bekannte Ansätze zur Lösung dieses Problems sind die Reinigung und Desinfektion des Verdampfers anlässlich einer Wartung. Nachteilig sind hier eine mangelnde Nachhaltigkeit der Maßnahme und eine dadurch bedingte notwendige häufige Wiederholung der Wartung.

Um diesem Problem zu begegnen, ist in der DE 102 30 440 A1 eine Klimaanlage für ein Fahrzeug vorgesehen, bei welcher der Kühlkreislauf zeitweise umgeschaltet wird, um den Verdampfer zu erhitzen und so zu desinfizieren bzw. zu trocknen.

In der DE 600 29 060 T2 ist ferner eine Klimaanlage mit einem System zum automatischen Reinigen und Desinfizieren offenbart, welche einen Ozonisator aufweist. Der Ozonisator wird hierbei in vorbestimmten Intervallen betätigt, wobei die Behandlung innerhalb eines abschließbaren Bereichs erfolgt, in welchem ein zu behandelnder Luftfilter und ein zu behandelnder Verdampfer angeordnet sind. Zur Umwälzung der Luft ist ferner ein Ventilator im abschließbaren Bereich vorgesehen. Für eine Behandlung werden der abschließbare Bereich abgetrennt und der Ozonisator und der Ventilator betätigt. Nach einer Phase, in welcher die Luft mit Ozon versetzt wurde, ist eine Katalysierphase vorgesehen, in welcher das sich in der Einheit befindliche Ozon beseitigt wird. Anschließend wird der abschließbare Bereich geöffnet und die Klimaanlage kann wieder normal betrieben werden.

Aus der DE 10 2004 023 376 A1 ist eine Luftbehandlungsvorrichtung zur Anreicherung einer Luftströmung mit einer Gaskomponente bekannt, wobei die Luftbehandlungsvorrichtung in einen Luftkanal einer Klimatisierungseinrichtung einbaubar und in zwei Subeinheiten unterteilt ist, die so im Luftkanalquerschnitt angeordnet sind, dass die Luftströmung über den gesamten Luftkanalquerschnitt gleichmäßig mit der Gaskomponente beaufschlagbar bzw. anreicherbar ist. Als Gaskomponente kommt dabei insbesondere Ozon zum Einsatz. Für einen nennenswerten Entkeimungseffekt muss allerdings ein relativ hoher Ozongehalt der Luft sichergestellt werden. Zudem können Ozon und seine Reaktionsprodukte wie Aldehyde, Alkohole und Säuren schädigend auf die Gesundheit von der klimatisierten Luft ausgesetzten Personen einwirken.

Ferner ist aus der EP 08 16 148 A1 eine Anordnung für eine Fahrzeugklimaanlage bekannt, bei welcher mittels einer Düse eine Reinigungslösung auf einen Verdampfer der Klimaanlage gesprüht wird.

Es ist die Aufgabe der Erfindung, ein verbessertes Belüftungssystem, eine Heizungs- und/oder Klimaanlage zur Verfügung zu stellen. Ferner soll ein Verfahren zur Desinfektion oder Entkeimung von Bauteilen, Wasser oder Luft für eine Klimaanlage vorgesehen werden.

Die Aufgabe wird erfindungsgemäß gelöst durch ein Belüftungssystem, eine Heizungs und/oder Klimaanlage mit den Merkmalen des Anspruchs 1 und ein Verfahren zur Entkeimung von Bauteilen und/oder Wasser mit den Merkmalen des Anspruchs 5.

Vorteilhafte Ausgestaltungen der Erfindung sind Gegenstand der Unteransprüche.

Die Erfindung betrifft ein Belüftungssystem, eine Heizungs- und/oder Klimaanlage Belüftungssystem, Heizungs- und/oder Klimaanlage, insbesondere Fahrzeugklimaanlage, aufweisend mindestens ein Gebläse, welches der Erzeugung des Luftstroms dient, mindestens einen Luftkanal, in welchem der vom Gebläse erzeugte Luftstrom strömen kann, und ein Desinfektionsmodul, in welchem ein Desinfektionsmittel enthalten ist und/oder erzeugt wird, wobei das Desinfektionsmittel dem Luftkanal zuführbar ist. Hierbei ist das Desinfektionsmittel als flüssige Phase oder gelöst in einer Flüssigkeit bereitgestellt. Femer ist im Luftkanal mindestens eine Düse vorgesehen, durch welche das flüssige Desinfektionsmittel oder die Flüssigkeit mit dem hierin gelösten Desinfektionsmittel in den Luftkanal einsprühbar ist. Bevorzugt wird ein wasserlösliches Desinfektionsmittel verwendet. Das Einbringen des Desinfektionsmittels in der flüssigen Phase anstelle über die Luftphase erhöht die Effizienz des Desinfektionsmittels. Durch das Verwenden von in Wasser gelöstem Desinfektionsmittel oder als flüssige Phase vorliegendem Desinfektionsmittel kann der Eintrag von gesundheitlich bedenklichen Desinfektionsmitteln in den Fahrzeuginnenraum ferner minimiert werden. Ferner wird durch das erfindungsgemäße Auf-/Einsprühen des flüssigen Desinfektionsmittels in der flüssigen Phase das Problem der Besiedelung des Verdampfers mit Mikroorganismen an Ort und Stelle bekämpft, ohne die Luft mit Ozon zu belasten. Die Desinfektion erfolgt mittels eines flüssigen Desinfektionsmittels, wodurch ein Phasenübergang zwischen der Luft und dem Kondensat umgangen werden kann. Vielmehr wird das Desinfektionsmittel besonders direkt vor Ort in der flüssigen Phase erzeugt, wobei das Wasser in einem entsprechenden Reservoir mitgeführt oder durch das anfallende Kondenswasser aus dem Verdampfer gebildet werden kann. Ein Reinigen und Desinfizieren bei einer Wartung der Klimaanlage kann entfallen.

Hierbei dient besonders bevorzugt der vom Gebläse kommende Luftstrom als Träger zum Einsatzort des Desinfektionsmittels. Durch ein Einsprühen in Luftströmungsrichtung ausreichend vor dem eigentlichen Einsatzort kann sich der Nebel, welcher sich in Folge des Einsprühens bildet, im Luftstrom verteilen, so dass sich eine gleichmäßigere und insbesondere bedarfsgerechtere Verteilung des Desinfektionsmittels am Einsatzort ergibt, als im Falle eines direkten Einsprühens vor Ort. So gelangt an die Stellen, an die im normalen Betrieb auch mehr Feuchtigkeit gelangt und sich niederschlägt, und die besonders anfällig für Keimbildungen sind, mehr Desinfektionsmittel. Das Einsprühen erfolgt bevorzugt über eine Mehrzahl von Düsen.

Die Verteilung des Desinfektionsmittels am Einsatzort erfolgt bevorzugt über Kapillarwirkung, bspw. im Falle eines Verdampfers zwischen den Wellrippen und Flachrohren, und durch eine Unterstützung der durchströmenden Luft, welche einen Transport in Strömungsrichtung unterstützt. Ferner wird die Verteilung durch diverse Ausmischvorgänge und Spülvorgänge, durch Diffusionsprozesse, welche durch die unterschiedliche Ozonkonzentration im Wasser an unterschiedlichen Orten am Verdampfer zu Stande kommt, unterstützt.

Bevorzugt ist mindestens eine Düse in normaler Luftströmungsrichtung gesehen vor einem Filter angeordnet. In einem Filter sammeln sich häufig Keime, die - je nach Art des Filters - ggf. auch direkt hier abgetötet werden können, bspw. im Falle eines Aktivkohlefilters. Im Falle eines Partikelfilters kann eine Desinfektion von außen erforderlich sein, welche auf besonders einfache Weise durch das Einsprühen von Desinfektionsmittel in den Luftstrom erfolgen kann.

Besonders bevorzugt ist mindestens eine Düse in normaler Luftströmungsrichtung gesehen vor einem Verdampfer angeordnet. Auf Grund des Kondensierens von Wasser aus der Luft an den kalten Oberflächen kann ein Verdampfer eine wichtige Rolle bei Geruchsproblemen spielen.

Das Desinfektionsmittel kann hierbei jedoch auch auf einer in einer Strömungsrichtung des Luftstroms liegenden Seite, insbesondere auf der Abströmseite des Verdampfers aufgesprüht werden, da die Verkeimungsneigung des Verdampfers an dieser Stelle besonders hoch ist.

Besonders bevorzugt ist als Desinfektionsmittel Ozon vorgesehen, welches in Wasser gelöst ist. Insbesondere bevorzugt ist als Desinfektionsmodul ein Ozon erzeugendes Modul vorgesehen, welches aus dem Wasser gelöstes Ozon erzeugt, und das dann in Wasser gelöste Ozon mittels der mindestens einen Düse in den Luftstrom sprühbar ist. Die Wasserozonisierung erfordert, im Vergleich mit der Luftozonisierung, einen vergleichsweise geringen Aufwand und ist in Bezug auf die Keimabtötung deutlich effizienter. Auch ist das Gesundheitsrisiko bei der Verwendung von ozonisiertem Wasser geringer, da kein Ozon in der Luft erzeugt wird.

Dem Desinfektionsmodul ist Wasser zuführbar, welches an einem Verdampfer als Kondenswasser anfällt. Wird Ozon bspw. durch hochenergetisches UV-Licht, im Rahmen einer stillen elektrischen Entladung oder in einer Elektrolysezelle erzeugt, so muss von außen kein Desinfektionsmittel oder Wasser eingebracht werden und die Desinfektion erfolgt vollständig servicefrei.

Das Desinfektionsmittel enthält freie Sauerstoffradikale wie Hydroxidradikale, Superoxide, gelöstes Ozon und/oder Wasserstoffperoxid, wobei diese besonders effektiv die Zellmembranen der Mikroorganismen zerstören. Die gesundheitliche Beeinträchtigung ist gering, insbesondere wenn die Superoxide, Ozon und/oder Wasserstoffperoxid in Wasser insbesondere unterhalb einer kritischen Konzentration gelöst vorliegen.

Die beispielhaft genannten Desinfektionsmittel können in einem Reservoir vorgehalten und dieses bei Bedarf nachgefüllt werden. Vorzugsweise werden jedoch Superoxide, gelöstes Ozon und/oder Wasserstoffperoxid aus Wasser mittels eines Ozonierungsmoduls, insbesondere mittels einer Elektrolysezelle, erzeugt. Eine Elektrolysezelle arbeitet nach dem umgekehrten Prinzip einer Wasserstoff-Brennstoffzelle. Dabei liegt eine elektrische Spannung an einer Anode und an einer Kathode an, durch die Wassermoleküle in hydratisierten Wasserstoff und hydratisiertes Ozon getrennt werden. Insbesondere erzeugt die Elektrolysezelle ein Gemisch aktiver Oxidantien oder Superoxiden. Als Beispiele seien hierfür neben dem gelösten Ozon, Perhydroxylradikale, Wasserstoffperoxid, Hydroxylradikale, Aloxylradikale, Peroxylradikale oder Hydroperoxyd genannt. Insbesondere das Ozon reagiert in weiterer Folge mit dem restlichen Wasser zu Superoxiden.

Dies ist besonders dann vorteilhaft, wenn das Wasser aus einem Kondenswasserabscheider der Klimaanlage stammt. Der Kondenswasserabscheider sammelt am Verdampfer infolge der Abkühlung des Luftstromes kondensiertes Wasser. Üblicherweise wird das Wasser an dieser Stelle aus dem System der Klimaanlage ausgeschieden, hier jedoch auf vorteilhafte Weise genutzt. Somit entfällt die Vorhaltung von Desinfektionsmittel oder Wasser.

Bevorzugt erfolgt die eigentliche Speicherung des Wassers in einer der Elektrolysezelle angeschlossenen schwammartigen Struktur, aus der die Elektrolysezelle bedarfsweise Wasser entnehmen kann. Eine bedarfsgerechte und insbesondere wartungsfreie Integration ist dadurch realisierbar.

Vorzugsweise wird das Desinfektionsmittel mittels einer Kolben-Membran-Pumpe aus der Elektrolysezelle angesaugt und der Düse zugeführt, wo es fein zerstäubt auf den Verdampfer aufgesprüht wird, insbesondere mit einer Tröpfchengröße von höchstens 20 µm, bevorzugt höchstens 10 µm, besonders bevorzugt höchstens 5 µm. Bei gleich bleibendem Volumen vergrößert sich durch die geringe Tröpfchengröße die Oberfläche des Desinfektionsmittels, wodurch sich dessen Aktivität verbessert. Alternativ zu Kolben-Membran-Pumpen können auch andere geeignete Pumpen verwendet werden.

In einer bevorzugten Ausführungsform sind dem Desinfektionsmittel Duftstoffe zusetzbar, um den gegebenenfalls wahrnehmbaren Geruch der Superoxide, des Ozons und/oder des Wasserstoffperoxids zu maskieren, insbesondere mittels eines wasserlöslichen Duftsteines. Die Duftstoffe können auch getrennt vom C7esinfektionsmittel dem Luftstrom beigemischt werden.

Eine mögliche Ausführungsform der Erfindung gestattet die bedarfsgerechte Desinfektion des Verdampfers, insbesondere nur bei Bildung von Verdampferkondensat während des Betriebes der Klimaanlage. Vorteilhaft ist dabei, dass nur geringe Konzentrationen des Desinfektionsmittels, beispielsweise mehrmals täglich, erforderlich sind.

Eine weitere Möglichkeit ist die intervallartige Desinfektion, dann mit einer entsprechend höheren Konzentration des Desinfektionsmittels.

Ebenso kann eine manuelle Bedienung zur Desinfektion auf Anforderung vorgesehen sein.

In einer besonders bevorzugten Ausführungsform ist ein Feuchtigkeitssensor vorgesehen, mit dem Feuchtigkeit am Verdampfer detektierbar ist. Das Desinfektionsmittel wird dann in Abhängigkeit von dieser Feuchtigkeit gebildet und auf den Verdampfer aufgesprüht, da Geruchsbildung in der Klimaanlage nur dann entsteht, wenn eines ihrer Teile, meist zuerst der Verdampfer, feucht ist. Auf diese Weise wird eine bedarfsabhängige Desinfektion erreicht.

Ebenfalls kann im Falle eines Flüssigkeitsreservoirs eine Füllstandsanzeige vorgesehen sein. Auch im Falle einer Elektrolysezelle zur Erzeugung des Desinfektionsmittels kann eine Füllstandsanzeige vorgesehen sein, um sicherzustellen, dass ausreichend Flüssigkeit vorhanden ist.

Die Superoxide, das gelöste Ozon und/oder Wasserstoffperoxid wird vorzugsweise mittels der Elektrolysezelle bei stehendem Fahrzeug erzeugt und aufgebracht.

Bevorzugt kann ein Beduftungsmodul vorgesehen sein, welches dem Luftstrom neben und/oder anstelle des Desinfektionsmittels einen Duftstoff beimischt. Der Duftstoff kann im Rahmen der Desinfektion entstehende Gerüche, wie bspw. der von Wasserstoffperoxid, überlagern, so dass der Komfort im Fahrzeuginnenraum nicht beeinträchtigt wird. Das Beduftungsmodul weist bevorzugt Düsen auf, durch welche der Duftstoff dem Luftstrom beimischbar ist, welche in Luftströmungsrichtung gesehen hinter den Düsen des Desinfektionsmoduls angeordnet sind.

Besonders bevorzugt erfolgt das Einsprühen des Desinfektionsmittels kontinuierlich und in geringen Mengen. Eine Beeinträchtigung der Insassen erfolgt bei geringen Mengen nicht. Gegebenenfalls entstehende Gerüche, bspw. in Folge eines Entstehens von Wasserstoffperoxid, können durch das Beimischen eines Duftstoffs überlagert werden. Die kontinuierliche Desinfektion kann zudem, insbesondere im Falle einer Klimaanlage auf Betriebszustände beschränkt werden, in denen der Einsatzort, also im Falle einer Klimaanlage insbesondere der Verdampfer, nass ist.

Ein kontinuierliches Einsprühen kann von Intervallen mit einem Einsprühen einer größeren Menge an Desinfektionsmittel überlagert werden. Das Einsprühen größerer Mengen an Desinfektionsmittel kann bspw. in konstanten Intervallen, die zeit- oder kilometerstandsabhängig sind, und/oder beim Ausschalten des Motors und Abziehen des Zündschlüssels erfolgen, d.h. vor einem längeren Stillstand, wenn sich in der Regel niemand im Fahrzeuginnenraum befindet.

Besonders bevorzugt erfolgt parallel oder leicht zeitlich nach hinten versetzt zum Einsprühen des Desinfektionsmittels ein Einsprühen eines Duftstoffs in den Luftstrom.

Im Folgenden wird die Erfindung anhand mehrerer Ausführungsbeispiele mit Varianten, teilweise unter Bezugnahme auf die beiliegende Zeichnung, näher erläutert. In der Zeichnung zeigen:

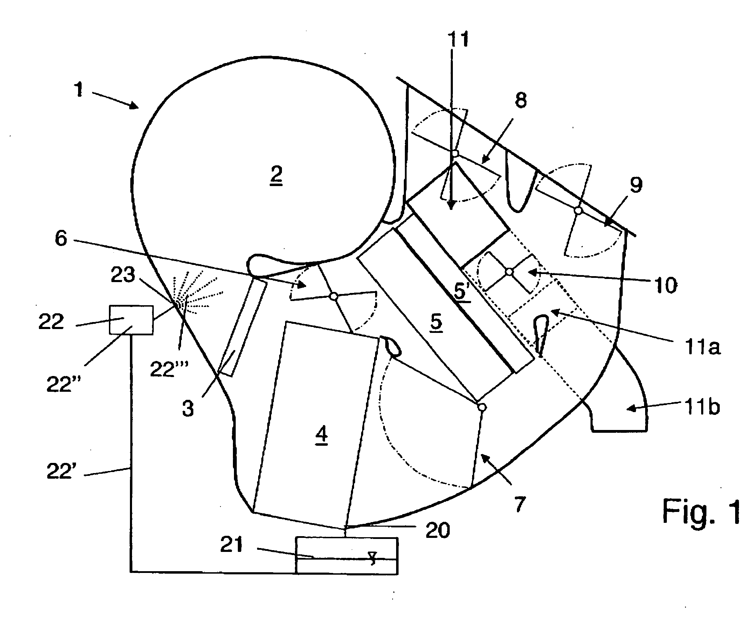

- Fig. 1: eine schematische Darstellung einer Klimaanlage gemäß dem ersten Ausführungsbeispiel,
- Fig. 2: eine schematische Darstellung einer Klimaanlage gemäß dem zweiten Ausführungsbeispiel,
- Fig.3: eine schematische Darstellung einer Klimaanlage gemäß dem dritten Ausführungsbeispiel, und
- Fig.4: eine schematische Darstellung einer Klimaanlage gemäß dem vierten Ausführungsbeispiel.

Ein Kraftfahrzeug weist eine nicht näher dargestellte Regelung für die Belüftung des Fahrzeuginnenraums auf. Die Regelvorrichtung regelt neben der Art (Frischluft und/oder Umluft) und Menge (Gebläseleistung) der dem innenraum zugeführten Luft auch die Luftverteilung sowie die Temperierung der Luft durch die Klimaanlage 1. Ferner regelt die Regelvorrichtung eine Bedüsung der zugeführten Luft mit dem Desinfektionsmittel, die insbesondere der Desinfektion eines Luftfilters und Verdampfers dient.

Die Klimaanlage 1 weist ein Gebläse 2 mit einem Luftfilter 3, einen Verdampfer 4 und einen Heizkörper 5 mit PTC-Zuheizer 5' auf, wobei der Zuheizer 5' auch entfallen kann. Hierbei ist gemäß dem vorliegenden Ausführungsbeispiel parallel zum Verdampfer 4 eine Bypass-Klappe 6 vorgesehen, welche einen benachbart zum Verdampfer 4 angeordneten Bypass freigibt oder verschließt, der ein Vorbeiströmen der vom Gebläse, 2 kommenden Luft am Verdampfer 4 ermöglicht. Dieser mittels der Bypass-Klappe 6 geregelte Bypass kann auch entfallen. Hinter dem Verdampfer 4 ist eine weitere Klappe 7 vorgesehen, welche die vom Verdampfer 4 kommende Luft entweder durch den Heizkörper 5 mit PTC-Zuheizer 5' oder an ihm vorbei leitet. Hierbei sind Zwischenstellungen der Klappe 7 möglich. Nach den Wärmetauschern 4 und 5 ist eine Defrost-Klappe 8 zum Entfernen eines Beschlags an der Windschutzscheibe, welche einen Defrost-Luftkanal bei Bedarf öffnet oder verschließt, und eine Belüftungs-Klappe 9 zum Belüften des Fahrzeuginnenraums z.B. über Mittel- und Seitendüsen, welche einen Belüftungs-Luftkanal bei Bedarf öffnet oder verschließt, vorgesehen.

Femer ist direkt nach dem Heizkörper 5 eine Fußraum-Klappe 10 angeordnet, welche einen Luftkanal 11 zum Fußraum nach Bedarf freigibt oder verschließt, wobei auch Zwischenstellungen der Fußraum-Klappe 10 möglich sind. Der Luftkanal 11 verzweigt sich gemäß dem vorliegenden Ausführungsbeispiel unmittelbar nach der Klappe 10 in einen Luftkanal 11a, welcher der seitlichen Luftzufuhr zum Fußraum dient, und einen Luftkanal 11 b, welcher der hinteren Luftzufuhr zum Fußraum dient.

Die Luft wird im Normalbetrieb vom Gebläse 2 - je nach Stellung der Umluft-und Frischluft-Klappen (nicht dargestellt) - aus der Umgebung (Frischluft) und/oder aus dem Fahrzeuginnenraum angesaugt, gefiltert und zur Temperierung durch die zuvor beschriebene Kraftfahrzeug-Klimaanlage 1 und über die verschiedenen Luftkanäle in Abhängigkeit der entsprechenden Klappenstellungen der Klappen 8, 9 und 10 in die entsprechenden Bereiche des Fahrzeuginnenraums geleitet.

Da sich üblicherweise ein Teil der in der Luft enthaltenen Luftfeuchtigkeit als Kondenswasser im Verdampfer 4 niederschlägt, ist ein Kondenswasserabscheider 20 mit einem Kondenswasserablauf vorgesehen, durch welchen das Kondenswasser nach außen in einen Sammelbehälter 21 abgegeben werden kann. Vorliegend ist der Kondenswasserabscheider 20 derart ausgebildet, dass das Kondenswasser von selbst in den Sammelbehälter 21 abläuft, wobei er stets offen ist.

Ferner ist ein Desinfektionsmodul, vorliegend in Gestalt eines Ozonierungsmoduls 22, vorgesehen, welches mit dem Sammelbehälter 21 für Kondenswasser über eine Saugleitung 22' verbunden ist. Das Ozonierungsmodul 22 saugt mittels einer Pumpe bedarfsgerecht Wasser aus dem Sammelbehälter 21 und sprüht mittels einer Mehrzahl von über die Wand des Luftführungsgehäuses verteilte Düsen 23 mit Ozon angereichertes Wasser als Desinfektionsmittel 22''' in die vom Gebläse 2 kommende Luft, vorliegend bevor dieselbe zum Luftfilter 3 und zum Verdampfer 4 gelangt.

Die Ozonerzeugung im Ozonierungsmodul 22 erfolgt vorliegend mittels einer Elektrolysezelle 22", kann jedoch auch auf beliebige andere Weise, bspw. mittels stiller elektrischer Entladung oder mittels hochenergetischem UV-Licht, erfolgen.

Durch das Ozon im in den Luftstrom eingesprühten Wasser, welches sich insbesondere im Verdampfer 4 niederschlägt, erfolgt eine Desinfektion desselben, so dass die Entstehung unerwünschter Keime o.ä. im Verdampfer und damit unerwünschter Gerüche, die über die durchströmende Luft in den Fahrzeuginnenraum gelangen, unterbunden werden kann.

Gemäß dem ersten Ausführungsbeispiel erfolgt eine Desinfektion durch eine Betätigung des Ozonierungsmoduls 22. Eine Desinfektion von Luftfilter und/oder Verdampfer sowie anderen im Luftstrom hinter der Einsprühstelle des Desinfektionsmittels 22'" liegenden Bauteilen und Luftkanalwänden kann kontinuierlich und/oder in Intervallen oder aber bedarfsgeregelt erfolgen. Im Falle einer kontinuierlichen Betätigung wird nur eine geringe Menge an Ozon erzeugt, dies aber über die gesamte Zeit. Femer erfolgt in vorgegebenen Intervallen (z.B. im Rahmen des Kundendiensts oder einmal im Monat oder in Abhängigkeit des Kilometerstands, z.B. alle 1000km) oder bei Bedarf eine kurzzeitige Erzeugung einer großen Menge an Ozon.

An Stelle eines Ozonierungsmoduls 22 ist gemäß einer ersten Variante des ersten Ausführungsbeispiels eine Desinfektion mittels eines anderen wasserlöslichen Desinfektionsmittels vorgesehen, welches in einem entsprechenden Desinfektionsmodul angeordnet ist, in welchem Kondenswasser mit dem Desinfektionsmittel vermischt und anschließend über Düsen der vom Gebläse kommenden Luft beigemischt wird. Die Desinfektion kann - entsprechend der Desinfektion mittels Ozon - kontinuierlich und/oder in Intervallen oder aber bedarfsgeregelt erfolgen.

Das Einbringen eines flüssigen Desinfektionsmittels kann gemäß einer zweiten Variante des ersten Ausführungsbeispiels auch derart erfolgen, dass das Desinfektionsmittel in einem Sammelbehälter bevorratet wird und mit Hilfe eines Desinfektionsmoduls, welches im Wesentlichen eine Pumpe beinhaltet, über die Düsen der Luft beigemischt wird.

Die Ausgestaltung des ersten Ausführungsbeispiels entspricht der Ausgestaltung des zweiten und dritten Ausführungsbeispiels, die im Folgenden beschrieben werden, so dass auf der Ausgestaltung, sofern sie sich nicht von der des ersten Ausführungsbeispiels nicht unterscheidet, nicht näher eingegangen wird. Ferner werden für gleiche Bauteile die gleichen Bezugszeichen verwendet.

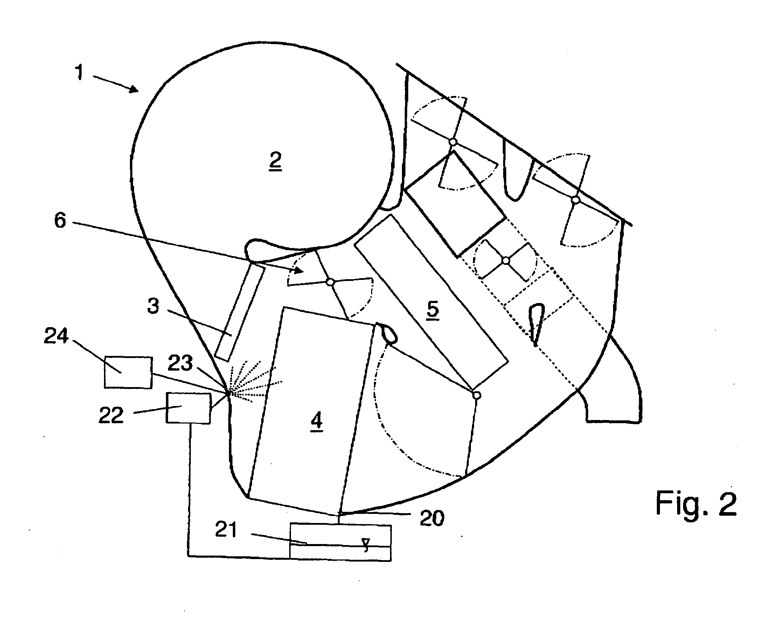

Gemäß dem zweiten, in Fig. 2 dargestellten Ausführungsbeispiel erfolgt das Einsprühen von mit Ozon angereichertem Wasser, wobei es sich wiederum um Kondenswasser vom Verdampfer 4 handelt, hinter dem Luftfilter 3 und direkt vor dem Verdampfer 4 mittels einer Mehrzahl von Düsen 23, wobei in der Zeichnung nur eine Düse angedeutet ist. Auf Grund der Anordnung der Düsen 23 kann sichergestellt werden, dass zumindest ein Großteil des mit Ozon versetzten Wassers in den Verdampfer 4 und nicht in den Bypass hierzu gelangt. Zudem kann die Durchströmgeschwindigkeit der mit dem mit Ozon versetzten Wasser angereicherten Luft durch den Verdampfer 4 mit Hilfe der Bypass-Klappe 6 in Verbindung mit der Gebläseleistung sowie den nachfolgenden Klappen geregelt werden.

Ferner ist ein Beduftungsmodul 24 vorgesehen, in welchem sich eine mit einem Duftstoff versetzte Flüssigkeit befindet, die entsprechend dem mit Ozon versetzten Wasser über die Düsen 23 in den Luftstrom eingesprüht werden kann. Das Einsprühen erfolgt vorliegend abwechselnd, wobei zuerst die Desinfektion und anschließend die Beduftung erfolgt.

Auch in diesem Fall kann an Stelle mit dem Ozonierungsmodul ein Desinfektionsmodul vorgesehen sein.

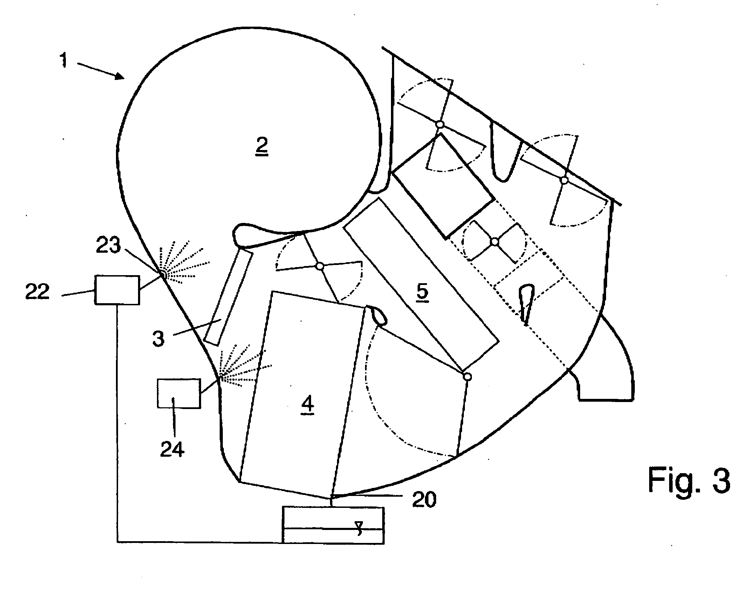

In Fig. 3 ist als drittes Ausführungsbeispiel eine Klimaanlage 1 vorgesehen, welche sowohl ein Ozonierungsmodul 22, wie es gemäß dem ersten Ausführungsbeispiel vorgesehen ist, also vor dem Luftfilter 3 angeordnet, als auch ein getrennt hiervon ausgebildetes Beduftungsmodul 24 aufweist, welches entsprechend dem zweiten Ausführungsbeispiel hinter dem Luftfilter 3 angeordnet ist. Dies ermöglicht über eine Mehrzahl von Düsen ein Einsprühen von Desinfektionsmittel, vorliegend Wasser mit Ozon, und Duftstoff parallel zueinander.

Natürlich ist in sämtlichen, vorstehend erwähnten Fällen eine Kombination eines Ozonierungsmoduls mit einem Desinfektionsmodul möglich, über welches ein anderes Desinfektionsmittel dem Luftstrom beigemischt wird, wobei für die beiden Module sowohl getrennte Düsen als auch gemischt genutzte oder bei gleichzeitigem Einbringen gemeinsam genutzte Düsen vorgesehen sein können.

Obwohl vorstehend nur eine Fahrzeugklimaanlage beschrieben ist, kann eine entsprechende Ozonierung oder sonstige Desinfektion auch bei Raumklimaanlagen vorgesehen sein, welche Luft ansaugen. Ebenfalls kann die Desinfektion auch bei reinen Belüftungssystemen oder bei Heizungsanlagen vorgesehen sein.

Ferner kann eine entsprechende Desinfektion, insbesondere mittels Ozonierung, auch bei einem reinen Belüftungssystem oder einem Belüftungssystem mit einem Heizer zur Reinigung eines hierin vorgesehenen Luftfilters vorgesehen sein, jedoch ist in diesem Fall mangels des im Betrieb eines Verdampfers anfallenden Kondenswassers eine externe Wasserversorgung in Gestalt eines Wasserbehälters mit Nachfüllmöglichkeit erforderlich.

Eine externe Wasserversorgung des Ozonierungsmoduls oder eines sonstigen Desinfektionsmoduls, welches Wasser für seine Funktion benötigt, kann auch im Falle einer Klimaanlage vorgesehen sein, jedoch ist in diesem Fall eine Überwachung in Bezug auf den Wasservorrat erforderlich, welche im Falle einer Verwendung von Kondenswasser vom Verdampfer auf Grund der Menge des Kondenswasseranfalls entfallen kann.

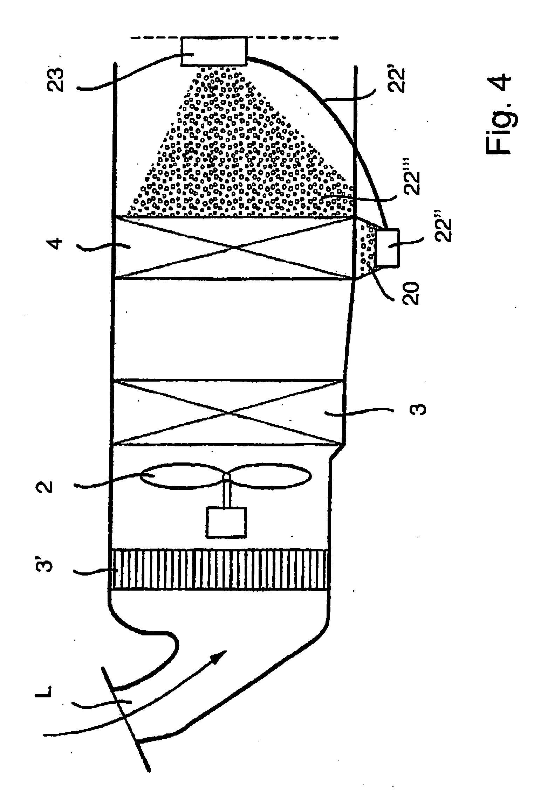

Figur 4 zeigt einen schematischen Längsschnitt durch eine Klimaanlage 1 gemäß dem vierten Ausführungsbeispiel mit einer Entkeimungsvorrichtung. Ein von einem Gebläse 2 angesaugter Luftstrom L passiert zunächst einen Vorfilter 3', das Gebläse 2 und einen Luftfilter 3, bevor er an einem Verdampfer 4 gekühlt und/oder getrocknet wird. Das dabei anfallende Kondenswasser rinnt an dem Verdampfer 4 nach unten und sammelt sich in einem Kondenswasserabscheider 20. Die häufig oder permanent vorhandene Feuchtigkeit am Verdampfer 4 begünstigt die Ansiedlung von Mikroorganismen. Durch den Luftstrom L werden die Mikroorganismen oder deren Stoffwechselprodukte in einen zu klimatisierenden Raum, beispielsweise den Innenraum eines Fahrzeugs, getragen und können dort für Geruchsbelästigung oder schlimmstenfalls gesundheitliche Beeinträchtigung von Fahrzeuginsassen führen. Der Kondenswasserabscheider 20 beinhaltet eine Elektrolysezelle 22" mit einer schwammartigen Struktur (nicht gezeigt), die das Kondenswasser speichert. Die Elektrolysezelle 22" erzeugt permanent, intervallartig oder bei abgestelltem Fahrzeug mittels elektrischer Energie wassergelöstes Ozon aus einem Teil des Kondenswassers, so dass sich ein Desinfektionsmittel 22'" in der Form einer Lösung von Superoxiden in Wasser ergibt. Dabei soll eine bestimmte Konzentration in Vol.% nicht überschritten werden, was mittels geeigneter Überwachungseinrichtungen sichergestellt werden kann. Das Desinfektionsmittel 22''' wird mittels einer in einer der Zerstäubung dienenden Düsenanordnung befindlichen Kolben-Membran-Pumpe durch eine Saugleitung 22' aus der Elektrolysezelle 22" angesaugt und der Düsenanordnung zugeführt, wo es fein zerstäubt mit einer Tröpfchengröße von höchstens 20 µm, bevorzugt höchstens 10 µm, durch eine Düse 23 austritt und auf eine Seite des Verdampfers 4 aufgesprüht wird. Der Desinfektionseffekt des Wasserstoffperoxids liegt u.a. in der Zerstörung der Zellmembranen der Mikroorganismen.

Alternativ können andere, insbesondere wasserlösliche Desinfektionsmittel 22'" verwendet werden.

Das Desinfektionsmittel 22'" kann an anderer Stelle des Verdampfers 4, insbesondere in Richtung des Luftstroms L vor dem Verdampfer 4 aufgesprüht werden, wie beispielsweise gemäß den ersten drei Ausführungsbeispielen vorgesehen.

Das Desinfektionsmittel 22'" kann abweichend vom in Fig. 4 gezeigten Ausführungsbeispiel in einem Reservoir vorgehalten und bedarfsweise nachgefüllt werden.

Ebenso kann das für die Elektrolyse benötigte Wasser in einem Reservoir vorgehalten und bedarfsweise nachgefüllt werden.

Das Desinfektionsmittel 22'" kann zusätzlich mit Duftstoffen versetzt werden. Insbesondere sind wasserlösliche Duftsteine geeignet.

Die Desinfektion des Verdampfers 4 kann permanent, insbesondere während des Betriebs der Klimaanlage 1 erfolgen, vorzugsweise mit einer geringen Konzentration des Desinfektionsmittels 22"'. Alternativ kann eine intervallartige Desinfektion gemäß eines vom Fahrzeugnutzer oder Servicepersonal vorgenommenen Intervalls vorgesehen sein, gegebenenfalls mit einer erhöhten Konzentration des Desinfektionsmittels 22"'. Ebenso kann eine manuelle oder bedarfsorientierte Desinfektion erfolgen, beispielsweise durch am Verdampfer detektierte Feuchtigkeit ausgelöst.

Die elektrolytische Erzeugung von Superoxiden, gelöstem Ozon und/oder Wasserstoffperoxid und/oder die Desinfektion des Verdampfers 4 können auf Betriebszustände des Fahrzeugs beschränkt sein, in denen das Fahrzeug steht und/oder die Klimaanlage und/oder das Gebläse nicht in Betrieb ist.

## Patentansprüche

1. Belüftungssystem, Heizungs- und/oder Klimaanlage, insbesondere Fahrzeugklimaanlage (1), aufweisend mindestens ein Gebläse (2), welches der Erzeugung des Luftstroms dient, mindestens einen Luftkanal, in welchem der vom Gebläse (2) erzeugte Luftstrom (L) strömen kann, und ein Desinfektionsmodul (22), in welchem ein Desinfektionsmittel (22"') enthalten ist und/oder erzeugt wird, wobei das Desinfektionsmittel (33''') dem Luftkanal zuführbar ist und als flüssige Phase oder gelöst in einer Flüssigkeit bereitgestellt ist, wobei im Luftkanal mindestens eine Düse (23) vorgesehen ist, durch welche das flüssige Desinfektionsmittel (22''') oder die Flüssigkeit mit dem hierin gelösten Desinfektionsmittel (22''') in den Luftkanal einsprühbar ist,
**dadurch gekennzeichnet, dass**
das Desinfektionsmittel (22''') Superoxide, gelöstes Ozon und/oder Wasserstoffperoxid enthält und eine Elektrolysezelle (22") vorgesehen ist, mittels derer das Superoxid, das gelöste Ozon und/oder Wasserstoffperoxid aus Wasser aus einem Kondenswasserabscheider (20) der Klimaanlage (1) erzeugbar ist.

2. Belüftungssystem, Heizungs- und/oder Klimaanlage nach Anspruch 1, **dadurch gekennzeichnet, dass** der Luftstrom (L) als Träger für das Desinfektionsmittel (22"') zum Einsatzort dient.

3. Belüftungssystem, Heizungs- und/oder Klimaanlage nach Anspruch 1 oder 2, **dadurch gekennzeichnet, dass** mindestens eine Düse (23) in normaler Luftströmungsrichtung gesehen vor einem Verdampfer (4) angeordnet ist.

4. Belüftungssystem, Heizungs- und/oder Klimaanlage nach einem der vorhergehenden Ansprüche, **dadurch gekennzeichnet, dass** das Desinfektionsmittel (22''') von der Düse (23) mit einer Tröpfchengröße von höchstens 20 µm, insbesondere 10 µm aufsprühbar ist.

5. Verfahren zum Desinfizieren eines von Luft durchströmten Bereichs eines Belüftungssystems, oder einer Heizungs- und/oder Klimaanlage nach einem der Ansprüche 1 bis 4 mit Hilfe eines Desinfektionsmittels (22'''), wobei das Desinfektionsmittel (22"') als flüssige Phase oder gelöst in einer Flüssigkeit in den Luftstrom (L) während des Betriebs des Gebläses (2) eingesprüht wird
**dadurch gekennzeichnet, dass**,
als Desinfektionsmittel (22''') eine Superoxide, gelöstes Ozon und/oder Wasserstoffperoxid enthaltende Lösung verwendet wird, die in einer Elektrolysezelle (22") aus Wasser erzeugt wird, das in einem Kondenswasserabscheider (20) aus während des Betriebes der Klimaanlage (1) anfallendem Kondenswasser angesammelt wird.

6. Verfahren nach Anspruch 5, **dadurch gekennzeichnet, dass** das Desinfektionsmittel (22''') permanent und/oder intervallartig und/oder infolge manueller Bedienung und/oder bedarfsgesteuert in Abhängigkeit von einer Feuchtigkeit des Verdampfers (4) auf den Verdampfer (4) aufgesprüht wird.

## Claims

1. A ventilation system, heating and/or air-conditioning system, in particular a motor vehicle air-conditioning system (1), comprising at least one blower (2) for generating the air flow, at least one air duct in which the air flow (L) generated by the blower (2) can flow, and a disinfection module (22) in which a disinfectant (22''') is contained and/or is produced, wherein the disinfectant (33''') can be supplied to the air duct and is provided as a liquid phase or dissolved in a fluid, and at least one nozzle (23) is provided in the air duct, through which the liquid disinfectant (22''') can be injected into the air duct, **characterized in that**
the disinfectant (22''') contains superoxide, dissolved ozone, and/or hydrogen peroxide, and an electrolysis cell (22") is provided for creating the superoxide, dissolved ozone, and/or hydrogen peroxide from water from a condensed water separator (20) of the air-conditioning system (1).

2. The ventilation system, heating and/or air-conditioning system according to claim 1, **characterized in that** the air flow (L) is used to carry the disinfectant (22''') to the site of use.

3. The ventilation system, heating and/or air-conditioning system according to claim 1 or 2, **characterized in that** at least one nozzle (23) is disposed upstream of an evaporator (4), as viewed in the normal air-flow direction.

4. The ventilation system, heating and/or air-conditioning system according to one of the preceding claims, **characterized in that** the disinfectant (22''') can be injected by the nozzle (23) with a droplet size of up to 20 µm, in particular 10 µm.

5. A method for disinfecting a region, through which air flows, of a ventilation system or a heating and/or air-conditioning system according to one of the claims 1 through 4 using a disinfectant (22'''), wherein the disinfectant (22''') is injected as a liquid phase or dissolved in a fluid into the air flow (L) during operation of the blower (2),
**characterized in that**
a solution containing superoxide, dissolved ozone, and/or hydrogen peroxide is used as the disinfectant (22'''), the solution being created in an electrolysis cell (22") out of water that is collected from condensed water produced in a condensed water separator (20) during operation of the air-conditioning system (1).

6. The method according to claim 5, **characterized in that** the disinfectant (22''') is injected onto the evaporator (4) permanently and/or at intervals and/or due to manual operation and/or as necessary depending on a wetness of the evaporator (4).

## Revendications

1. Système de ventilation, de chauffage et / ou de climatisation, en particulier système de climatisation (1) d'un véhicule, présentant au moins une soufflante (2) qui sert à la production du flux d'air, au moins un conduit d'air dans lequel peut s'écouler le flux d'air (L) produit par la soufflante (2), et un module de désinfection (22) dans lequel est contenu et / ou est produit un produit désinfectant (22'''), où le produit désinfectant (33''') peut être fourni au conduit d'air et est prêt à être utilisé en phase liquide ou bien dissous dans un liquide, où il est prévu, dans le conduit d'air, au moins une buse (23) par laquelle le produit désinfectant liquide (22''') ou le liquide contenant le produit désinfectant (22''') dissous dans le liquide peut être pulvérisé dans le conduit d'air,
**caractérisé en ce que** le produit désinfectant (22''') contient des peroxydes, de l'ozone dissous et / ou du peroxyde d'hydrogène, et il est prévu une cellule d'électrolyse (22") au moyen de laquelle le peroxyde, l'ozone dissous et / ou le peroxyde d'hydrogène peuvent être produits à partir de l'eau sortant d'un séparateur d'eau de condensation (20) du système de climatisation (1).

2. Système de ventilation, de chauffage et / ou de climatisation selon la revendication 1, **caractérisé en ce que** le flux d'air (L) sert de support pour le produit désinfectant (22'''), jusqu'au lieu d'utilisation.

3. Système de ventilation, de chauffage et / ou de climatisation selon la revendication 1 ou 2, **caractérisé en ce qu'**au moins une buse (23), vue dans la direction normale d'écoulement de l'air, est disposée en amont d'un évaporateur (4).

4. Système de ventilation, de chauffage et / ou de climatisation selon l'une quelconque des revendications précédentes, **caractérisé en ce que** le produit désinfectant (22''') peut être appliqué par pulvérisation, par la buse (23), la taille des gouttelettes étant au maximum de 20 µm, en particulier de 10 µm.

5. Procédé de désinfection d'une zone d'un système de ventilation, traversée par de l'air, ou bien d'un système de chauffage et / ou de climatisation selon l'une quelconque des revendications 1 à 4, à l'aide d'un produit désinfectant (22'''), où le produit désinfectant (22'''), en phase liquide ou dissous dans un liquide, est pulvérisé dans le flux d'air (L) au cours du fonctionnement de la soufflante (2),
**caractérisé en ce que** l'on utilise, comme produit désinfectant (22'''), une solution contenant des peroxydes, de l'ozone dissous et / ou du peroxyde d'hydrogène, solution qui est produite dans une cellule d'électrolyse (22"), à partir de l'eau qui est accumulée dans un séparateur (20) d'eau de condensation et provenant de l'eau de condensation se produisant au cours du fonctionnement du système de climatisation (1).

6. Procédé selon la revendication 5, **caractérisé en ce que** le produit désinfectant (22''') est appliqué sur l'évaporateur (4), par pulvérisation, de façon permanente et / ou par intervalles et / ou à la suite d'une utilisation manuelle et / ou programmé suivant les besoins en fonction d'une humidité de l'évaporateur (4).
